# EUROPEAN PATENT SPECIFICATION

(11) **EP 4 286 781 B1**
(45) Date of publication and mention of the grant of the patent: **27.11.2024**
(21) Application number: 22176991.2
(22) Date of filing: 02.06.2022
(51) Int. Cl.: F28D 15/00

(54) **HEAT CONDUCTING ELEMENT FOR TRANSFERRING HEAT AWAY FROM A BATTERY SYSTEM**
WÄRMELEITELEMENT ZUR ABLEITUNG VON WÄRME AUS EINEM BATTERIESYSTEM
ÉLÉMENT CONDUCTEUR DE CHALEUR POUR ÉVACUER LA CHALEUR D'UN SYSTÈME DE BATTERIE

(43) Date of publication of application: 06.12.2023
(73) Proprietor: Airbus S.A.S., 31060 Toulouse (FR)
(72) Inventor: Friedl, Stephan, 82024 Taufkirchen (DE); Hermle, Frank, 82024 Taufkirchen (DE)
(74) Representative: OTN Airbus SAS

(56) References cited:
- WO-A1-89/05952
- NO-A1- 20 110 364
- US-A- 5 325 913
- US-B2- 9 689 624

## Description

### Technical field

The invention relates to a battery system as defined in the preamble of claim 1, and as illustrated in US 9,689,624 B2

### Background of the invention

Large battery systems require thermal management to maintain battery cells in a desired, optimal operating temperature range. For example, due to the finite efficiency of battery cells, a certain power loss occurs and leads to the generation of heat, which needs to be dissipated. The sufficient heat dissipation is an enabler high power densities, as required in aerospace applications. Also, the cell temperatures have a considerable influence on the service life and battery safety. For achieving a sufficient heat dissipation, a good connection of the battery cells to a cooling system is advantageous.

A wide variety of cooling techniques are known for battery cooling, which include air-cooled and liquid-cooled battery designs. The thermal connection of the battery cells to a cooling system has an influence on the overall weight and safety of the battery system. Heat pipes are highly effective thermal conductors, have a low weight and allow a safe leakage-free operation. Furthermore, a heat pipe also ensures temperature equalization between the battery cells, which is advantageous in normal operation. The thermal behavior of individual cells must be controllable and locally higher temperatures must remain isolated. Since heat pipes would equalize temperatures between battery cells, their use is hardly possible.

### Summary of the invention

It is thus an object of the invention to propose an alternative system that uses a highly effective thermal conductor comparable to a heat pipe, but does not spread higher local temperatures from one battery cell to another.

This object is met by a battery systems having the features of claim 1. Advantageous embodiments and further improvements may be gathered from the subclaims and the following description.

The invention relates to a battery system, comprising a plurality of battery cells, a cooling device and at least one heat conducting element, wherein the plurality of battery cells is thermally connected to the at least one heat conducting element, which is coupled with the cooling device.

The heat conducting element having a heat pipe or a vapor chamber with a hollow structure, wherein the hollow structure has at least one opening that reaches from outside the hollow structure into the interior of the hollow structure, wherein the at least one opening is sealed by a meltable material, such that the interior of the hollow structure is fluid-tight, wherein inside the interior a working fluid in form of a saturated liquid and its vapor is provided for receiving, transferring and dissipating heat, wherein the heat conducting element has a predetermined operating temperature range with a minimum operating temperature and a maximum operating temperature, and wherein the meltable material has a predetermined melting temperature that exceeds the maximum operating temperature by a predetermined temperature difference, such that the meltable material melts if the hollow structure is exposed to a temperature that reaches the melting temperature to unseal the at least one opening.

The battery system according to the invention provides the ability of receiving heat, transferring it from a first point on the heat conducting element to a second point and to dissipate it through a heat dissipating device attached to the second point. For example, the conducting element of the battery system may be connected to a heat producing device, such as a battery, receive its heat and conduct it away from the heat producing device along the heat conducting element to a heat dissipation device connected to the conducting element installed in a distance to the heat producing device.

The heat conducting element of the battery system is mainly based on a heat pipe or a vapor chamber with a hollow structure. The heat pipe or vapor chamber utilizes a phase transition of a volatile liquid inside the hollow structure of the heat conducting element. A volatile liquid, which is also referred to as a working fluid, is selected depending on the predetermined operating temperature range, which in turn depends on the kind of heat producing device, to which the conducting element will be connected. Selecting a suitable working fluid is crucial. The working fluid shall be able to evaporate even at the minimum operating temperature and it shall be able to condense even at the maximum operating temperature. For example, the working fluid may be ammonia, methanol, ethanol, or water.

The heat conducting element of the battery system according to the invention may also be based on the so-called "Variable Conductance Heat Pipe" (VCHP), which realizes variable cooling with combined gas fillings. This may exemplarily be used to allow a warm-up of systems so that the heat transfer function only starts at a certain working temperature. The working fluid may thus include a mixture of several known working fluids if desired.

If a section of the heat conducting element is heated, the working fluid absorbs heat and vaporizes locally, such that the vapor pressure in the hollow structure is increased. The latent heat of the vaporization absorbed by the working fluid reduces the temperature at the respective heated section. At a section where a heat dissipating device is arranged, the equilibrium vapor pressure is smaller. This pressure differential drives a vapor transfer to the heat dissipating device, where the vapor condenses and releases its latent heat to the heat dissipating device. The liquid created through condensation flows back to the heated section and is available for further evaporation and condensation cycle.

For working properly, the hollow structure must be sealed. According to the invention, the hollow structure comprises at least one opening, through which vapor could exit the hollow structure. To prevent this, the at least one opening is sealed, i.e. closed in a fluid-tight manner, through a meltable material. The melting temperature of the meltable material is selected in a way that the meltable material melts if a previously selected critical temperature at the at least one opening is reached. If the meltable material melts, the at least one opening is unsealed and the heat pipe process is interrupted. Due to the pressure inside the heat pipe or vapor chamber, the meltable material may be blasted away once it starts to melt and the vapor from inside the hollow structure is discharged. The working fluid quickly exits from the hollow structure and thus the heat transfer through the working fluid ends.

The critical temperature is selected depending on the respective application of the heat conducting element. For example, an operating temperature range for the heat conducting element defines a safe temperature range, in which the heat conducting element operates and in which the respective heat producing devices, which are connected to the heat conducting element, can be operated. Once a critical temperature is reached, i.e. through an excessive temperature of a single one of a plurality of heat producing devices, the meltable material melts and the function of the heat conducting element is stopped.

The heat pipe or the vapor chamber itself represents an isothermal element. In it, the same temperature substantially prevails at every point. Thus, if the heat conducting element is attached to a battery system with a plurality of battery cells, the heat conducting element ensures an equalization of the temperatures of all battery cells that are connected, which is advantageous for the normal operation of the battery system. Furthermore, it is thus not particularly important for the above-described shutdown mechanism where the at least one opening and the meltable material are located, as the internal temperature of the heat conducting element is substantially the same everywhere and at a sufficiently high temperature will lead to a melting of the meltable material. Depending on the design and heat transfer, however, it may not be preferred to place the meltable material directly in the area of a heat sink.

As per claim 1, the battery system includes a plurality of battery cells. If one of the cells experiences a temperature runaway, with a conventional heat pipe or vapor chamber heat would simply be transferred to the other, normally operating battery cells, after which they may experience an undesired condition. However, according to the invention, the other battery cells are reliably protected. The heat conducting element according to the invention has a reliable, maintenance-free passive protection means for preventing spreading heat from one heat producing device with a temperature runaway to other heat producing devices with normal operating temperatures.

In an advantageous embodiment, the meltable material is a thermoplastic material., Thermoplastic materials, such as very low density polyethylene, may have a very low melting temperature of about 120°C. The selection and adjustment of the melting temperature is done depending on the respective application of the heat conducting device.

In an advantageous embodiment, the meltable material has a predetermined melting temperature in a range of 100°C to 140°C, preferably 110°C to 130°C and most preferably in a range of 115°C to 125C°. This is particularly beneficial for battery systems having battery cells based on Lithium. In particular, the melting temperature may be approximately 118°C.

In an advantageous embodiment, the hollow structure is an elongated element with the interior enclosed by a metallic pipe, wherein the hollow structure has a first end and a second end, and wherein the at least one opening is arranged at the first end and/or the second end. The metallic pipe may exemplarily be made from copper or aluminium. Copper is often used for water based heat pipes or vapor chambers. However, aluminium may be a feasible selection for ammonia based heat pipes or vapor chambers. When selecting the metallic material it is beneficial to also focus on the thermal conductivity and compatibility with the working fluid, since not all metallic materials appear to be suitable for all working fluids. When selecting the metallic material it may also be considered that if the heat pipe or vapor chamber is opened and thus loses its functionality, then the thermal conductivity of the metallic material still remains. Thin cross-sections and low thermal conductivity are then advantageous to prevent an excessive heat spreading. Therefore, heat pipes or vapor chambers made of stainless steel may also be of interest, even if the heat cannot be coupled as well through the material wall here. Providing at least one opening at a single end of the hollow structure allows to arrange heat producing devices in the vicinity of the at least one opening. It is beneficial to place the at least one opening at an end opposite to a heat sink, e.g. a cooling device.

The use of a single opening and just one section with a meltable material may be sufficient to ensure the function of the heat conducting element. In case an individual shutdown of one battery cell in case of overtemperature is required or desired and for maintaining a continuous cooling for the other battery cells a plurality of independent heat conducting elements may be used for each battery cell or each of several groups of battery cells, wherein each of the independent heat conducting elements comprises an opening and a meltable material to seal it. A collective heat pipe or vapor chamber may thermally connect the individual heat conducting elements to use the advantages described above to full capacity. For the sake of completeness, the use of a plurality of openings is not ruled out and may as well be realized.

In an advantageous embodiment, the heat conducting element is designed to continuously transfer heat in an orientation-independent manner. Thus, the heat conducting element may be installed and operated in a vehicle, which may repeatedly change its spatial orientation and which repeatedly accelerates in different directions. A heat pipe or vapor chamber may exemplarily comprise a wick structure at an inner surface of the hollow structure exerting a capillary action on the liquid phase of the working fluid.

In an advantageous embodiment, the hollow structure comprises a plurality of heat introduction interfaces designed to be thermally connected to a plurality of battery cells or other heat producing devices. The heat introduction interfaces may simply be a sufficient installation space for heat coupling elements, with which the heat conducting element is connectable to the respective battery cells. However a certain surface structure, a profile or other means may be provided.

In an advantageous embodiment, the hollow structure comprises a heat dissipation interface at a distance to the at least one opening. The heat dissipation interface is dedicated for attaching a cooling device, such as cooling fins, an active cooling apparatus or any other means that is capable of receiving heat from the heat conducting element and dissipating it. As mentioned above it is preferred that the at least one opening is arranged at a side of the heat conducting element, where heat is introduced.

In an advantageous embodiment, the heat dissipation interface and the at least one opening are arranged at opposite ends of the hollow structure. Consequently, the heat conducting element connects to distanced geometric locations, wherein in one location heat producing devices, such as battery cells, are provided and wherein in the other location a heat dissipation device is arranged.

The working fluid may particularly be water in combination with a copper-based hollow structure. However, ammonia as a working fluid in combination with an aluminum-based hollow structure would be suitable.

In an advantageous embodiment, the battery cells are Lithium based. The battery cells may be solid-state Lithium-ion battery cells having a polymer electrolyte. Of course, other variants are possible and this is merely an example. Lithium-ion battery cells usually comprise a narrow operating temperature range, which influences the service life and cycle stability of the battery cells.

In an advantageous embodiment, the cooling device and the battery cells are arranged at opposite ends of the heat conducting element. For example, the battery cells may be thermally connected to a central cooling system in a vehicle, wherein a heat exchanger is connected to an end of the heat conducting element opposite the battery cells.

In an advantageous embodiment, the at least one opening is arranged in a region directly adjacent to the battery cells. Thus, an immediate interruption of the function of the heat conducting element is provided if one of the battery cells experiences a temperature runaway.

The invention also relates to a vehicle, having a battery system according to the above.

In an advantageous embodiment, the vehicle is an aircraft, for example a commercial or transport aircraft. The use of a battery system according to the invention allows to provide an exceptionally reliable prevention of excessive heat transfer between battery cells, but allows a highly effective heat transfer to a cooling device in normal operation.

### Brief description of the figures

In the following, the attached drawings are used to illustrate exemplary embodiments in more detail. The illustrations are schematic and not to scale. Identical reference numerals refer to identical or similar elements. They show:
Fig. 1 schematically shows a heat conducting element in a sectional view.
Fig. 2 schematically shows the heat conducting element with battery cells and a heat sink attached to it.
Fig. 3 shows an aircraft.

### Detailed description of exemplary embodiments

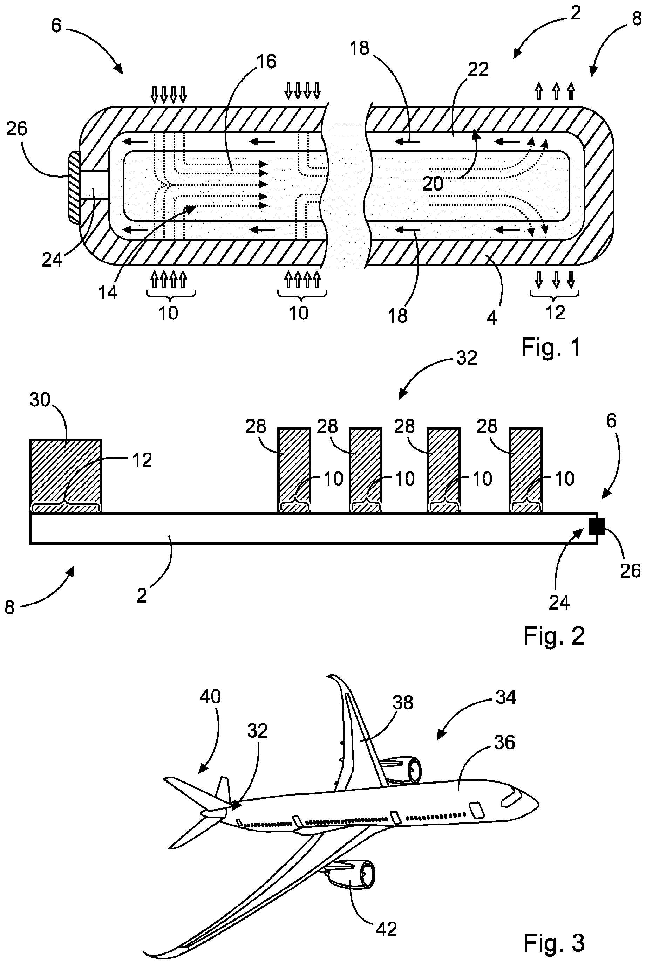

Fig. 1 shows a heat conducting element 2 for transferring heat. Here, the heat conducting element 2 is designed in the form of a heat pipe having a hollow structure 4, which is exemplarily realized in the form of a metallic tube or pipe. The hollow structure 4 comprises a first end 6 and a second end 8. At the first end 6, a plurality of heat introduction interfaces 10 are indicated, which are to be understood as sections of the heat conducting element 2, where a heat producing device is thermally connected to transfer heat into the heat conducting element 2. The heat is indicated in the form of arrows with double bar. At the second end 8, a heat dissipation interface 12 is provided, where heat is transferred into a heat dissipating device, which is not shown herein.

In an interior space 14 of the heat conducting element 2, a working fluid is provided in the form of a saturated liquid and its vapor. Essentially, the interior space 14 does not comprise any further gases or substances. Heat that enters the heat conducting elements 2 at the heat introduction interfaces 10 is evaporated and vapor 16 is created. As the vapor pressure inside the hollow structure 4 increases and since the equilibrium vapor pressure is smaller at the heat dissipating interface 12, the vapor 16 is driven towards the second end 8. Here, the vapor condenses and releases its latent heat to the heat dissipation device. Afterwards, the condensed working fluid in the form of liquid 18 travels back to the first end 6. At an inner surface 20 of hollow structure for, a wick structure 22 is provided, which ensures the transport of the liquid 18 irrespective of the spatial orientation of the hollow structure 4.

At the first end in vicinity to the heat introduction interfaces 10, an opening 24 is provided. The opening 24 connects the interior space 14 to the surrounding of the hollow structure 4, but is sealed by a meltable material 26, which is arranged at the outer side of the hollow structure 4 and completely covers the opening 24. Thus, vapor 16 and liquid 18 cannot exit the interior space 14 and air or other fluids or substances cannot enter the interior space 14 from the outside, when the meltable material 26 is in place.

The melting point of the meltable material 26 is selected in a way that a predetermined critical temperature rising at one of the heat introduction interfaces 10 leads to melting the meltable material 26, which interrupts the working function of the heat conducting element 2 in an instant. If a temperature runaway of a heat producing device connected to one of the heat introduction interfaces 10 occurs with the opening 24 being sealed, the heat would also be transferred to the other heat introduction interfaces 10, which may affect the heat producing devices arranged at these other heat introduction interfaces 10. However, when the meltable material 26 melts upon the excessive heat, heat conduction is abruptly interrupted and the other heat producing devices are protected from overheating.

The position of the opening 24 is arbitrarily shown. It is preferred to place the opening 24 near the heat introduction interfaces 10 or away from a heat sink. However, further openings 24 may also be provided, but are not required for the shutdown function described.

The hollow structure 4 may be a metallic material, such as copper, aluminum or stainless steel, and has a good heat conductivity to provide a sufficient heat transfer into the interior space 14. The kind of working fluid depends on the desired operating temperature range of the heat producing devices, to which the heat conducting element 2 is connected. For example, water or ammonia may be suitable for battery applications.

Fig. 2 shows the heat conducting element 2 with a plurality of battery cells 28 in thermal connection to the heat introduction interfaces 10. At the second end 8, a heat sink in form of a heat dissipation device 30 is provided. This arrangement constitutes a battery system 32, wherein the battery cells 28 may comprise Lithium. By using the heat conducting element 2, overheating of the battery cells 28 is protected even if one of the battery cells 28 may experience a temperature runaway. It may also be feasible to design the heat conducting element 2 as a flat vapor chamber, onto which multiple rows and columns of battery cells 28 may be attached.

Fig. 3 shows an aircraft 34 having a fuselage 36, wings 38, a tail plane 40 and engines 42. The battery system 32 may be arranged in the vicinity of the tail plane 40 and the heat dissipation device 30 may be connected to a central cooling system or may be realized as a standalone cooling device. The battery system 32 may further comprise at least one sensor arranged at the battery cells 28 and/or the heat conducting element 2 to detect the thermal conditions of the battery cells 28. This allows to switch off the battery system 32, i.e. separate it from an electric circuit inside the aircraft 34, once the meltable material 26 is melted and the heat conducting element 2 is inoperable.

## Claims

1. A Battery system (32), comprising a plurality of battery cells (28), a cooling device and at least one heat conducting element (2) for transferring heat away from a heat producing device (28), the heat conducting element (2) having a heat pipe or a vapor chamber with a hollow structure (4),
the battery system being **characterised in that** the hollow structure (4) has at least one opening (24) that reaches from outside the hollow structure (4) into the interior of the hollow structure (4),
wherein the at least one opening (24) is sealed by a meltable material (26), such that the interior (14) of the hollow structure (4) is fluid-tight,
wherein inside the interior (14) a working fluid in form of a saturated liquid and its vapor is provided for receiving, transferring, and dissipating heat,
wherein the heat conducting element (2) has a predetermined operating temperature range with a minimum operating temperature and a maximum operating temperature, and
wherein the meltable material (26) has a predetermined melting temperature that exceeds the maximum operating temperature by a predetermined temperature difference, such that the meltable material (26) melts if the hollow structure (4) is exposed to a temperature that reaches the melting temperature to unseal the at least one opening (24).
wherein the plurality of battery cells (28) are thermally connected to the at least one heat conducting element (2), which is coupled with the cooling device, wherein the meltable material is a thermoplastic material.

2. The Battery system (32)according to claim 1,
wherein the meltable material (26) has a predetermined melting temperature in a range of 100°C to 140°C, preferably 110°C to 130°C and most preferably in a range of 115°C to 125C°.

3. The Battery system (32)according to any of the preceding claims,
wherein the hollow structure (4) is an elongated element with the interior (14) enclosed by a metallic material,
wherein the hollow structure (4) has a first end (6) and a second end (8), and
wherein the at least one opening (24) is arranged at the first end (6) and/or the second end (8).

4. The Battery system (32)according to any of the preceding claims,
wherein the hollow structure (4) is designed to continuously transfer heat in an orientation-independent manner.

5. The Battery system (32)according to any of the preceding claims,
wherein the hollow structure (4) comprises a plurality of heat introduction interfaces (10) designed to be thermally connected to a plurality of battery cells (28).

6. The Battery system (32)according to any of the preceding claims,
wherein the hollow structure (4) comprises a heat dissipation interface (12) at a distance to the at least one opening (24).

7. The Battery system (32)according to claim 6,
wherein the heat dissipation interface (12) and the at least one opening (24) are arranged at opposite ends (6, 8) of the heat conducting element (2).

8. Battery system (32) according to any of the preceding claims, wherein the battery cells (28) are Lithium based.

9. Battery system (32) according to any of the preceding claims, wherein the cooling device (30) and the battery cells (28) are arranged at opposite ends (6, 8) of the heat conducting element (2).

10. Battery system according to any of the any of the preceding claims, wherein the at least one opening (24, 24a, 24b, 24c) is arranged in a region directly adjacent to the battery cells (28).

11. Vehicle (34), having a battery system (32) according to any of the claims 1 to 10.

12. Vehicle (34) according to claim 11, wherein the vehicle (34) is an aircraft (34).

## Patentansprüche

1. Batteriesystem (32), umfassend eine Mehrzahl von Batteriezellen (28), eine Kühleinrichtung und mindestens ein Wärmeleitelement (2) zum Abführen von Wärme von einer wärmeerzeugenden Einrichtung (28), wobei das Wärmeleitelement (2) ein Wärmerohr oder eine Dampfkammer mit einer Hohlstruktur (4) aufweist,
wobei das Batteriesystem **dadurch gekennzeichnet ist, dass** die Hohlstruktur (4) mindestens eine Öffnung (24) aufweist, die von außerhalb der Hohlstruktur (4) in das Innere der Hohlstruktur (4) reicht,
wobei die mindestens eine Öffnung (24) durch ein schmelzbares Material (26) verschlossen ist, so dass der Innenraum (14) der Hohlstruktur (4) flüssigkeitsdicht ist,
wobei innerhalb des Innenraums (14) ein Arbeitsfluid in Form einer gesättigten Flüssigkeit und ihres Dampfes zur Aufnahme, Übertragung und Ableitung von Wärme vorgesehen ist,
wobei das Wärmeleitelement (2) einen vorgegebenen Betriebstemperaturbereich mit einer minimalen Betriebstemperatur und einer maximalen Betriebstemperatur aufweist, und
wobei das schmelzbare Material (26) eine vorbestimmte Schmelztemperatur aufweist, die die maximale Betriebstemperatur um eine vorbestimmte Temperaturdifferenz übersteigt, so dass das schmelzbare Material (26) schmilzt, wenn die hohle Struktur (4) einer Temperatur ausgesetzt wird, die die Schmelztemperatur erreicht, um die mindestens eine Öffnung (24) zu öffnen,
wobei die mehreren Batteriezellen (28) thermisch mit dem mindestens einen Wärmeleitelement (2) verbunden sind, das mit der Kühlvorrichtung gekoppelt ist,
wobei das schmelzbare Material ein thermoplastisches Material ist.

2. Batteriesystem (32) nach Anspruch 1,
wobei das schmelzbare Material (26) eine vorbestimmte Schmelztemperatur in einem Bereich von 100°C bis 140°C, vorzugsweise 110°C bis 130°C und am meisten bevorzugt in einem Bereich von 115°C bis 125C° aufweist.

3. Batteriesystem (32) nach einem der vorhergehenden Ansprüche,
wobei die Hohlstruktur (4) ein längliches Element ist, dessen Innenraum (14) von einem metallischen Material umschlossen ist,
wobei die Hohlstruktur (4) ein erstes Ende (6) und ein zweites Ende (8) aufweist, und
wobei die mindestens eine Öffnung (24) an dem ersten Ende (6) und/oder dem zweiten Ende (8) angeordnet ist.

4. Batteriesystem (32) nach einem der vorhergehenden Ansprüche,
wobei die Hohlstruktur (4) zur kontinuierlichen, orientierungsunabhängigen Wärmeabgabe ausgebildet ist.

5. Batteriesystem (32) nach einem der vorangehenden Ansprüche,
wobei die Hohlstruktur (4) eine Vielzahl von Wärmeeinleitungsschnittstellen (10) umfasst, die dazu ausgelegt sind, mit einer Vielzahl von Batteriezellen (28) thermisch verbunden zu werden.

6. Batteriesystem (32) nach einem der vorhergehenden Ansprüche,
wobei die Hohlstruktur (4) eine Wärmeableitungsschnittstelle (12) in einem Abstand zu der mindestens einen Öffnung (24) aufweist.

7. Batteriesystem (32) nach Anspruch 6,
wobei die Wärmeableitungsschnittstelle (12) und die mindestens eine Öffnung (24) an gegenüberliegenden Enden (6, 8) des Wärmeleitelements (2) angeordnet sind.

8. Batteriesystem (32) nach einem der vorhergehenden Ansprüche,
wobei die Batteriezellen (28) auf Lithium basieren.

9. Batteriesystem (32) nach einem der vorhergehenden Ansprüche,
wobei die Kühlvorrichtung (30) und die Batteriezellen (28) an gegenüberliegenden Enden (6, 8) des Wärmeleitelements (2) angeordnet sind.

10. Batteriesystem nach einem der vorhergehenden Ansprüche,
wobei die mindestens eine Öffnung (24, 24a, 24b, 24c) in einem Bereich unmittelbar neben den Batteriezellen (28) angeordnet ist.

11. Fahrzeug (34), mit einem Batteriesystem (32) nach einem der Ansprüche 1 bis 10.

12. Fahrzeug (34) nach Anspruch 11,
wobei das Fahrzeug (34) ein Flugzeug (34) ist.

## Revendications

1. Système de batterie (32) comprenant plusieurs éléments de batterie (28), un dispositif de refroidissement et au moins un élément conducteur de chaleur (2) pour transférer la chaleur loin d'un dispositif de production de chaleur (28), l'élément conducteur de chaleur (2) ayant un tuyau de chaleur ou une chambre de vapeur avec une structure creuse (4),
le système de batterie est **caractérisé par le fait que** la structure creuse (4) a au moins une ouverture (24) qui va de l'extérieur de la structure creuse (4) à l'intérieur de la structure creuse (4),
dans laquelle l'au moins une ouverture (24) est scellée par un matériau fusible (26), de sorte que l'intérieur (14) de la structure creuse (4) est étanche aux fluides,
dans lequel l'intérieur (14) contient un fluide de travail sous la forme d'un liquide saturé et de sa vapeur pour recevoir, transférer et dissiper la chaleur,
dans lequel l'élément conducteur de chaleur (2) a une plage de température de fonctionnement prédéterminée avec une température de fonctionnement minimale et une température de fonctionnement maximale, et
dans lequel le matériau fusible (26) a une température de fusion prédéterminée qui dépasse la température de fonctionnement maximale d'une différence de température prédéterminée, de sorte que le matériau fusible (26) fond si la structure creuse (4) est exposée à une température qui atteint la température de fusion pour desceller l'au moins une ouverture (24).
dans lequel la pluralité d'éléments de batterie (28) est thermiquement connectée à l'au moins un élément conducteur de chaleur (2), qui est couplé au dispositif de refroidissement,
dans lequel le matériau fusible est un matériau thermoplastique.

2. Système de batterie (32) selon la revendication 1,
dans lequel le matériau fusible (26) a une température de fusion prédéterminée comprise entre 100°C et 140°C, de préférence entre 110°C et 130°C et, de préférence encore, entre 115°C et 125C°.

3. Système de batterie (32) selon l'une des revendications précédentes,
dans lequel la structure creuse (4) est un élément allongé dont l'intérieur (14) est entouré d'un matériau métallique,
dans laquelle la structure creuse (4) a une première extrémité (6) et une seconde extrémité (8), et
dans laquelle au moins une ouverture (24) est disposée à la première extrémité (6) et/ou à la seconde extrémité (8).

4. Système de batterie (32) selon l'une quelconque des revendications précédentes,
dans lequel la structure creuse (4) est conçue pour transférer continuellement la chaleur indépendamment de l'orientation.

5. Système de batterie (32) selon l'une quelconque des revendications précédentes,
dans lequel la structure creuse (4) est conçue pour transférer la chaleur de manière continue et indépendante de l'orientation,
dans lequel la structure creuse (4) comprend une pluralité d'interfaces d'introduction de chaleur (10) conçues pour être thermiquement connectées à une pluralité d'éléments de batterie (28).

6. Système de batterie (32) selon l'une quelconque des revendications précédentes,
dans lequel la structure creuse (4) comprend une interface de dissipation thermique (12) à distance de l'au moins une ouverture (24).

7. Système de batterie (32) selon la revendication 6,
dans lequel l'interface de dissipation thermique (12) et la au moins une ouverture (24) sont disposées aux extrémités opposées (6, 8) de l'élément conducteur de chaleur (2).

8. Système de batterie (32) selon l'une des revendications précédentes,
dans lequel les éléments de batterie (28) sont à base de lithium.

9. Système de batterie (32) selon l'une quelconque des revendications précédentes,
dans lequel le dispositif de refroidissement (30) et les éléments de batterie (28) sont disposés aux extrémités opposées (6, 8) de l'élément conducteur de chaleur (2).

10. Système de batterie selon l'une quelconque des revendications précédentes,
dans lequel l'au moins une ouverture (24, 24a, 24b, 24c) est disposée dans une région directement adjacente aux éléments de batterie (28).

11. Véhicule (34) comportant un système de batterie (32) selon l'une quelconque des revendications 1 à 10.

12. Véhicule (34) selon la revendication 11,
dans lequel le véhicule (34) est un avion (34).
